# EUROPEAN PATENT SPECIFICATION

(11) **EP 0 408 156 B1**
(45) Date of publication and mention of the grant of the patent: **10.08.1994**
(21) Application number: 90202439.7
(22) Date of filing: 13.05.1988
(51) Int. Cl.: A01F 12/56

(54) **Drive system for combine harvester**
Antriebssystem für Mähdrescher
Groupe propulseur pour moissonneuse-batteuse

(30) Priority: 15.05.1987 US 50972
(43) Date of publication of application: 16.01.1991
(62) Divisional of application: 88304369.7
(73) Proprietor: DEERE & COMPANY, Moline, Illinois 61265 (US)
(72) Inventor: Cook, Charles Edward, Hampton Illinois 61756 (US); Freiburger, Thomas William, Davenport Iowa 52807 (US)
(74) Representative: Smith, Philip Antony

(56) References cited:
- DE-A- 3 207 082
- DE-B- 1 500 371
- US-A- 3 540 028

## Description

The present invention is directed to a drive system for a large work vehicle, such as an agricultural combine (combine harvester).

Large work vehicles, such as agricultural combines, may have a single internal combustion engine for both propelling the vehicle and powering various usage assemblies for performing work. In a relatively traditional design, an agricultural combine is provided with a transversely mounted engine having a drive sheave that extends outwardly through the side sheet of the combine. The drive sheave is coupled to countershafts through belts which in turn drive the various usage assemblies. These usage assemblies include the propulsion motors, the threshing and separating means, and the harvesting means. The propulsion motors may either be driven by a belt directly or through an intermediate hydrostatic pump.

Although belt drive systems have proven to be effective means of transmitting power to the combine's various operating means, they do increase the transverse front of the machine. In Europe, there are strict regulations regulating the maximum allowable transverse front of a machine at three meters. As such, a combine with a transverse engine and transverse mounted operating means must sacrifice transverse threshing and separating area to accommodate the power transmitting systems.

US-A-4 289 440 discloses a clutch for the unloading auger of a combine comprising an idle roller on a pivot arm being able to engage and disengage the drive of the unloading auger. The distance of the pulleys of the drive and the auger is constant at the operation of the clutch.

The present invention reduces this problem by providing a drive system as defined in claim 1.

In a preferred embodiment of a compact driving system for a transversely mounted engine, three concentric driving shafts are housed in a single housing. Both the inner shaft and outer shaft are always live when the engine is turning, but the middle shaft is provided with a clutch which is also housed in the casing for coupling and decoupling the middle shaft to the engine. The inner shaft extends from the casing through the side sheet of the combine and is provided with a sheave for driving the unloading auger assembly. The unloader auger assembly is provided with a swing arm for coupling and decoupling the output of the inner shaft to and from the unloading auger assembly.

The outer shaft is provided with a first bevel gear assembly located inside the casing which directs the output of the outer shaft longitudinally backward. Four "piggyback" hydraulic pumps are operatively mounted to the output of the first bevel gear assembly for driving hydraulic propulsion motors, pressurizing power steering hydraulic circuits and providing hydraulic pressure for other systems on the combine. The outer shaft is always live when the engine is operating so that hydraulic pressure is always available when the engine is in operation.

The middle shaft is provided with a second bevel gear assembly located in the casing which directs the output of the middle shaft longitudinally forward. This output drive shaft extends through the clean grain tank to a third bevel gear assembly adjacent to the threshing cylinder. The third bevel gear assembly drives a transverse counter shaft having sheaves at both ends. The sheaves extend beyond the side sheets of the combine and are used for driving the threshing and separating means.

By eliminating the necessity of providing transverse sheaves for driving the propulsion motors; by providing a means for driving the threshing and separating countershaft adjacent to the threshing cylinder; and by locating the unloading auger drive assembly close to the unloading auger; the length of the V-belt runs are reduced thereby reducing the overlapping of the V-belts and reducing the transverse front needed for the operating systems driving means.

### Brief Description of the Drawings

FIG. 1 is a side view of a combine schematically illustrating the operating means.

FIG. 2 is a top view illustrating the location of the engine and the driving system.

FIG. 3 is a schematic view illustrating the operating system of the combine.

FIG. 4 is a cross sectional view of the driving system.

FIG. 5 is a side view of the unloading auger driving means, including a hydraulic schematic of the control system for the driving means.

### Detailed Description

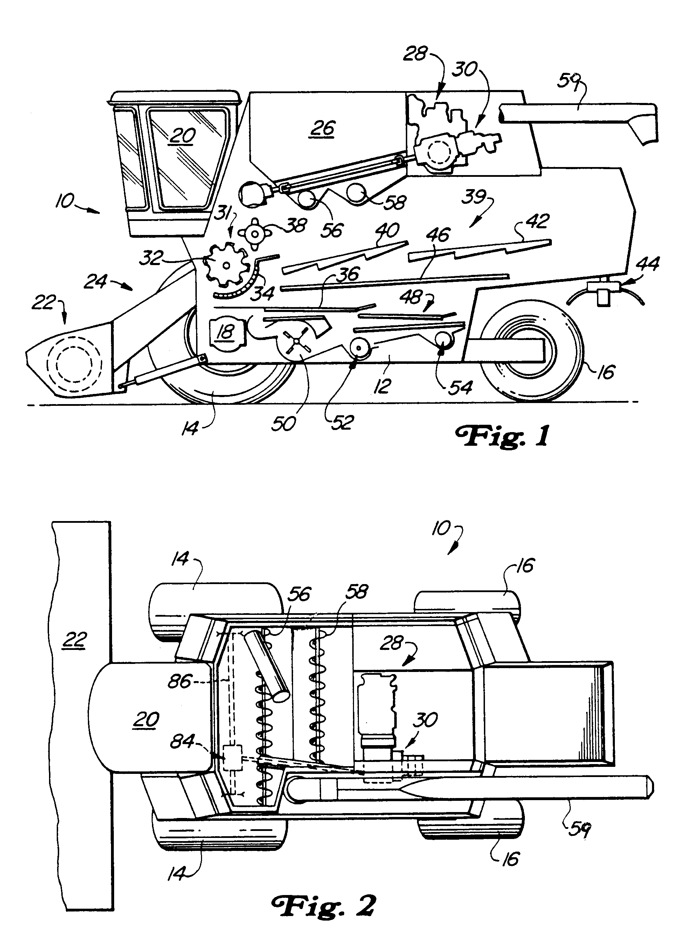

FIGS. 1 and 2 illustrate an agricultural combine 10, having a chassis 12 and ground engaging wheels 14 and 16. Forward ground engaging wheels 14 are driven by hydraulic motor 15 located between the wheels. An operator seated in operator control cab 20 controls the operation of the combine. Harvesting platform 22 extends forwardly from the chassis of the combine and is used for harvesting a crop in a field. After harvesting, the crop is then directed through feeder house 24 and into the combine. Clean grain compartment 26 is located behind the operator's cab at the top of the combine. Behind compartment 26 is transverse internal combustion engine 28 which is the prime mover of the combine, powering the propulsion means, the harvesting means, and the threshing and separating means. The internal combustion engine 28 is provided with a driving means 30 for powering the various usage assemblies.

Between the side sheets of the combine, which form the chassis of the combine, is located the threshing and separating means. The threshing and separating means separates the grain from the straw and chaff of the harvested crop. The feeder house directs the harvested grain to threshing means 31 which comprises rotating transverse threshing cylinder 32, transverse concave 34, and rotating beater 38. As the crop passes between cylinder 32 and concave 34, grain and chaff fall through the concave to pan 36 and the remaining straw and unseparated grain is advanced to beater 38.

After threshing, the straw in the crop is advanced to separating means 39. The main elements of the separating means are straw walkers 40 and 42, and cleaning shoe assembly 48. From beater 38 the crop is advanced to the oscillating straw walkers 40 and 42 which direct the straw to the rear of the combine where it is returned to the field by straw choppers 44. Grain and chaff falling through the straw walkers falls onto oscillating slanted pan 46 which directs the grain and chaff to pan 36. The grain and chaff are directed from pan 36 by overhead auger assemblies to cleaning shoe assembly 48 which is used to separate the chaff from the grain. The grain and chaff falling onto the chaffer and sieve of the cleaning shoe assembly encounters an air stream from fan 50 which blows the lighter chaff out of the rear of the combine while the heavier grain falls through the cleaning shoe assembly and into clean grain receiving auger 52.

Auger 52 directs the clean grain to a clean grain elevator (not shown) which in turn directs the grain to clean grain compartment 26. Tailings, that is unthreshed heads of grain, fall into tailings auger 54 which directs the unthreshed heads back to the threshing cylinder and concave. When the clean grain compartment is to be unloaded, transverse unloading augers 56 and 58 direct the grain to the side of the compartment from where it comes into contact with a vertical unloading auger (not shown) which directs the clean grain through unloading tube 59. During an unloading operation, tube 59 would normally be extended outwardly from the side of the combine so that clean grain can be more readily directed into a wagon or truck. It should be noted that the arrangement of the threshing and separating elements is well known, and that this invention is primarily directed to the system for driving these elements and the combine in an efficient and compact manner.

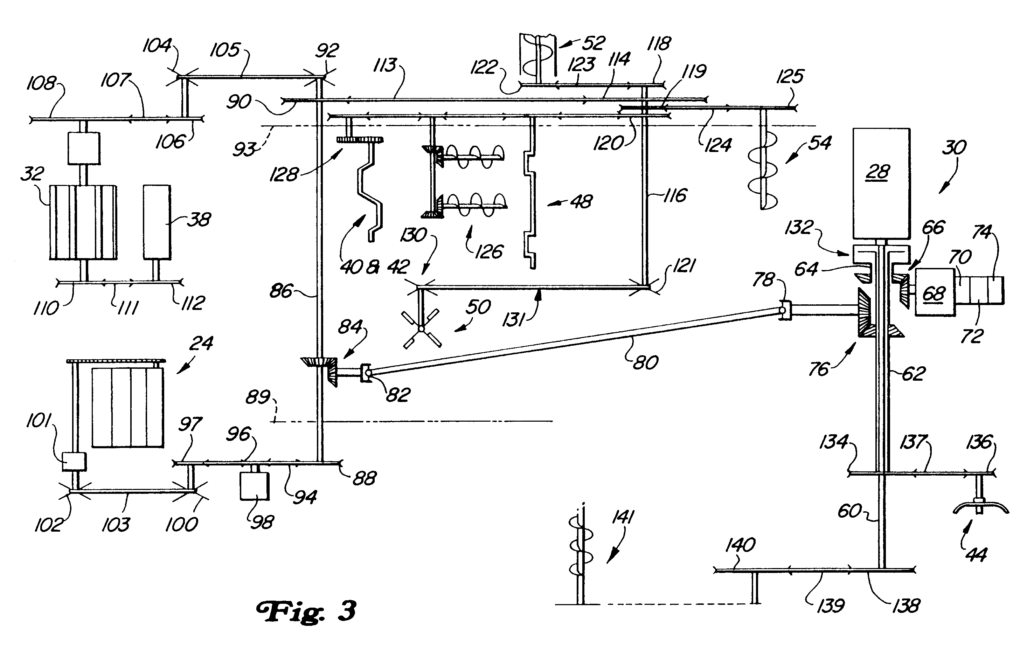

The drive system is schematically illustrated in FIG. 3, together with its relationship to the operating means of the combine. Driving system 30 comprises three concentric transverse drive shafts, inner shaft 60, hollow middle shaft 62 and hollow outer shaft 64. Outer shaft 64 is provided with a first bevel gear assembly 66, the output of which is used to drive four "piggybacked" hydraulic pumps 68, 70, 72 and 74, which are marketed by Eaton Corporation. Hydraulic pump 68 is used for supplying hydraulic fluid to hydraulic propulsion motor 18 whereas pump 70 is the priming pump for pump 68. Pump 72 provides pressurized hydraulic fluid to other systems in the combine such as the hydraulic cylinder for extending the unloading auger tube 59. Hydraulic pump 74 pressurizes the hydraulic fluid for the power steering unit on the combine.

Middle shaft 62 is provided with a second bevel gear assembly 76 having an output shaft coupled to universal joint 78. Universal joint 78 is coupled to forwardly extending drive shaft 80 having a second universal joint 82 which is operatively coupled to third bevel gear assembly 84. Bevel gear assembly 84 drives first transverse countershaft 86 which is provided with left-hand sheave 88, and right-hand sheaves 90 and 92. Left-hand sheave 88 extends outside, of left side sheet 89 of the chassis whereas right hand sheaves 90 and 92 extend outside of right side sheet 93 of the chassis. Left-hand sheave 88 is operatively coupled through V-belt 94 to sheaves 96 and 97. Sheave 96 drives hydraulic pump 98 for supplying pressurized hydraulic fluid to the harvesting reel whereas sheave 97 is operatively coupled to variable sheave 100. Variable sheave 100 is operatively coupled to variable sheave 102 by V-belt 103. The two variable sheaves form a variable speed drive for controlling the speed of the feeder house. A reverser 101 is positioned between the output of variable sheave 102 and feeder house 24 for reversing the feeder house when it becomes jammed.

Right-hand sheave 92 is a variable sheave that is operatively coupled to variable sheave 104 by V-belt 105. Variable sheaves 92 and 104 form a variable speed drive for controlling the speed of threshing means 31. Sheave 104 is operatively coupled to sheave 106 having V-belt 107 for driving sheave 108 which is operatively coupled to threshing cylinder 32. The threshing cylinder in turn is operatively coupled to sheave 110 having belt 111 for driving sheave 112. Sheave 112 drives beater 38.

Sheave 90 is operatively coupled to sheave 114 by belt 113. Sheave 114 drives second transverse counter shaft 116 which is provided with sheaves 118, 119, 120 and 121. Sheave 118 is operatively coupled to clean grain auger 52 by sheave 122 and belt 123. The clean grain auger in turn is operatively coupled to the clean grain elevator for directing the clean grain upwardly into the clean grain compartment. Sheave 119 drives tailing auger 54 through V-belt 124 and sheave 125. The tailings auger is operatively coupled to conveying means for returning the tailings to the threshing cylinder.

Sheave 120 drives three separating means elements through three separate driven sheaves, that is oscillating straw walkers 40 and 42, oscillating cleaning shoe assembly 48, and grain and chaff conveying augers 126 which overlie pan 36. Conveying augers 126 are used for directing the grain and chaff on pan 36 to the cleaning shoe assembly. The straw walkers are provided with gear case 128 having two meshing spur gears. Variable sheave 121 drives fan 50 through variable sheave 130 by means of belt 131, thereby providing a variable speed fan drive.

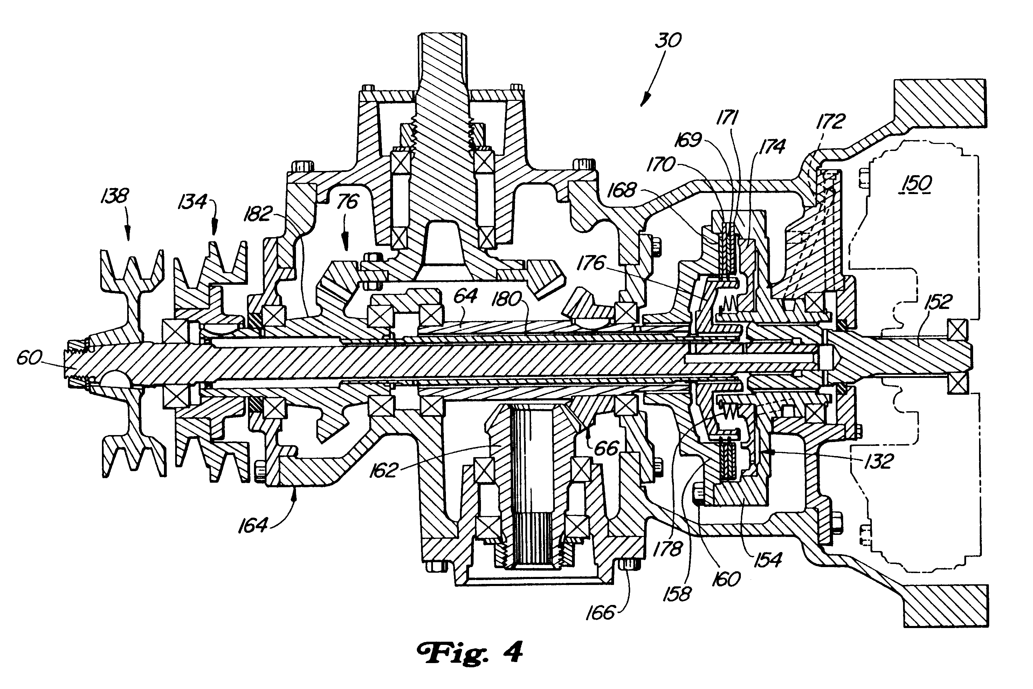

The middle shaft is also provided with clutch 132 (better illustrated in FIG. 4) for coupling and decoupling the middle shaft to the drive train. In addition, sheave 134 is mounted to the end of the middle shaft for driving straw chopper 44 through sheave 136 by means of belt 137. Therefore, when an operator wants to discontinue agricultural operations, that is harvesting, threshing, and separating, the operator decouples the middle shaft from the drive train by means of clutch 132. As such, when the middle shaft is declutched, the agricultural operations are halted, but the combine may still be driven and grain unloaded from the clean grain compartment.

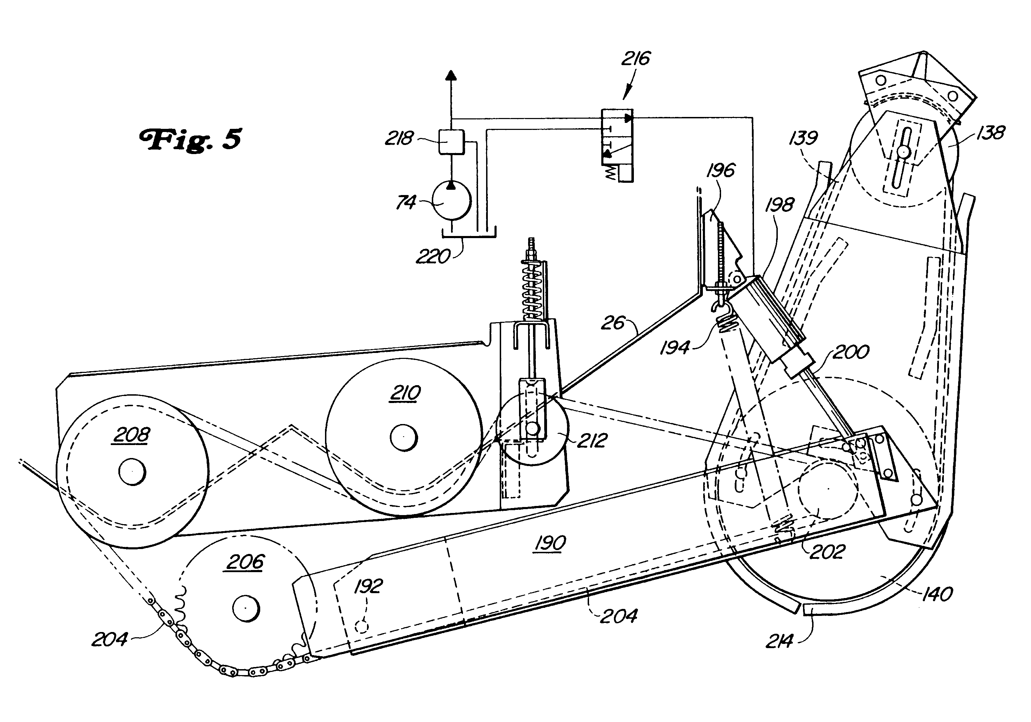

Inner shaft 60 is provided with sheave 138 having V-belt 139 for driving second sheave 140 for driving the unloading auger assembly 141. V-belt 139 is a declutchable belt from sheave 138 and its structure and operation are better illustrated in FIG. 5 which will be discussed in more detail below.

FIG. 4 illustrates the structural details of drive system 30. Engine flywheel 150 is provided with internal splines for gripping and operatively engaging stub shaft 152. The other end of the stub shaft is provided with internal and external splines which operatively engage inner shaft 60 and first annular plate 154. Plate 154 is coupled to second annular plate 158 by bolts 160 and is provided with internal splines for operatively engaging outer shaft 64. The outer shaft is provided with first bevel gear assembly 66 having an internally splined output stub shaft 162 for driving the four "piggybacked" hydraulic pumps (not shown in this figure) which are mounted to casing 164 by bolts 166. Inner shaft 60 is provided with double sheave 138 which extends beyond casing 164 and is used for driving the grain unloading assembly.

The middle shaft is provided with hydraulically actuated clutch 132 comprising internally splined friction plates 168 and 169 and pressure plates 170 and 171. The clutch is actuated by forcing hydraulic fluid through passage 172 which in turn presses piston 174 outwardly towards the friction and pressure plates. As the friction and pressure plates are compressed, the internal splines of the friction plates drive annular plate 176 which has an internal spline for operatively driving the middle drive shaft. Spring 178 normally biases the piston away from the clutch plates. The middle drive shaft comprises two hollow portions 180 and 182 which are operatively splined together. Portion 182 is operatively coupled to second bevel gear assembly 76 and straw chopper double sheave 134. The output shaft of bevel gear assembly 76 is provided with an external spline for engaging universal joint 78.

One of the key features of the present invention is how the two bevel gear assemblies are nested together to form a compact power transfer assembly. More specifically, by arranging the bevel gear assemblies so that the output members are opposite one another, the bevel gears can be compactly nested.

FIG. 5 illustrates the clutching assembly for the clean grain unloading system 141. The clean grain unloading system is driven by sheave 138 of inner shaft 60 which is provided with belt 139 for driving second sheave 140. Sheave 140 is mounted on swing arm 190 which is pivotally coupled to the chassis of the combine at 192. The swing arm is biassed upwardly by spring 194 which is mounted to bracket 196 which is bolted to the back wall of the clean grain compartment. Hydraulic cylinder 198 having piston rod 200 is used for extending the swing arm downwardly against the biassing force.

Sheave 140 is operatively coupled to sprocket 202 which is provided with chain 204. The chain engages sprockets 206, 208, 210 and 212 for the driving unloading transverse augers and thereby driving the vertical unloading augers for directing grain from clean grain compartment 26 through tube 59. Sprocket 212 is a spring biassed idler sprocket for maintaining chain tension. The swing arm comprises a U-shaped channel for protecting the chain and sprocket 202. The V-belt itself is protected by belt guard 214.

When an operator wishes to operate the unloading auger, he energizes spring biassed solenoid valve 216 into the position indicated in FIG. 5. The hydraulic fluid passes from hydraulic pump 74 through constant pressure valve 218 to valve 216 and through valve 216 to hydraulic cylinder 198. Applying hydraulic fluid to cylinder 198 drives piston rod outwardly thereby extending the swing arm downwardly. As the swing arm is extended downwardly, the spacing between sheaves 138 and 140 increases tightening the belt 139 and causing sheave 140 to be driven by constantly rotating driving sheave 138. To disengage the unloading system, the operator deenergizes valve 216 so that the spring drives the valve into a position wherein cylinder 198 is fluidically coupled to sump 220 and the flow of hydraulic fluid to the cylinder is checked. The biasing force of the spring drives hydraulic fluid in the cylinder back to the sump sand the swing arm is retracted. As the swing arm is retracted, belt guard 214 contacts the bottom of the belt and pushes it upwardly so that it becomes disengaged from sheave 138.

The simplified hydraulic circuit used in moving the swing arm is identical to the unillustrated hydraulic circuit used for manipulating hydraulic clutch 132 of the middle shaft.

## Claims

1. A self-propelled agricultural combine harvester for harvesting a crop from a field and threshing the harvested crop to separate grain from straw and chaff, comprising: a chassis (12) having a front and back ground engaging means (14, 16) extending downwardly from the chassis, the ground engaging means supporting the chassis and when rotated, driving the chassis across a field: a harvesting means (22) extending from the front of the chassis, for harvesting an agricultural crop from a field; a threshing and separating means (31, 39) located inside the combine, for separating grain from straw and chaff; a feeder house (24) for directing a harvested crop from the harvesting means inside the combine to the threshing and separating means; a clean grain compartment (26) mounted on the chassis and receiving the separated grain from the threshing and separating means, the clean grain compartment being provided with an unloading auger (141) for unloading the compartment; a swing arm (190) pivotally mounted on the chassis and pivotally positioned between an extended and a retracted position on the chassis by a hydraulic motor (198); and a prime mover having a first sheave (138) coupled to a second sheave (140) by a belt (139) that extends between the sheaves, the first sheave driving the second sheave and thereby the unloading auger when the swing arm is in its extended position and being decoupled from the second sheave when the swing arm is in its retracted position, characterized in that the second sheave (140) is mounted on the swing arm (190), the swing arm is provided with a biassing spring (194) mounted to the chassis and the swing arm for pulling the swing arm into its retracted position, the hydraulic motor (198) is a single-acting hydraulic cylinder for moving the swing arm to its extended position against the action of the biassing spring, the second sheave (140) is coupled to the unloading auger (141) by a chain (204) and the swing arm (190) comprises a U-shaped channel to form a chain guard.

2. An agricultural combine harvester according to claim 1, characterized in that the hydraulic motor is coupled to a constant pressure source (74, 218) of hydraulic fluid through a valve (216) for coupling and decoupling the source of hydraulic fluid to and from the hydraulic motor.

3. A combine harvester as claimed in claim 1 or 2 characterized by a belt guard (214) which as the swing arm is retracted contacts the belt (139) to disengage it from the first sheave (138).

## Patentansprüche

1. Ein selbstfahrender landwirtschaftlicher Mähdrescher zum Einbringen eines Gutes von einem Feld und zum Dreschen des eingebrachten Gutes, um Korn aus Stroh und Kaff auszuscheiden, besteht aus: einem Chassis (12), das ein vorderes und ein rückwärtiges bodenerfassendes Mittel (14, 16) aufweist, die sich von dem Chassis aus nach unten erstreckten, wobei die bodenerfassenden Mittel das Chassis tragen und das Chassis über ein Feld fahren, wenn sie umlaufend sind: einem Einbringungsmittel (22), das sich von der Front des Chassis zum Einbringen eines landwirtschaftlichen Gutes von einem Feld erstreckt; einem Dresch- und Trennmittel (31, 39), das innerhalb des Mähdreschers angeordnet ist, zum Ausscheiden von Korn aus Stroh und Kaff; einem Fördergehäuse (24) zum Leiten eines eingebrachten Gutes von dem Einbringungsmittel nach innen in den Mähdrescher zu den Dresch- und Trennmittel; einem Behälter (26) für gereinigtes Korn, der auf dem Chassis angeordnet ist und das ausgeschiedene Korn von dem Dresch- und Trennmittel erhält, wobei der Behälter für das gereinigte Korn mit einer Entladeschnecke (141) zum Entleeren des Behälters versehen ist; einem Schwenkarm (190), der schwenkbar an dem Chassis angeordnet ist und über einen hydraulischen Motor (198) zwischen einer ausgestellten und einer zurückgezogenen Stellung am Chassis schwenkbar in Stellung gebracht ist; und aus einer Antriebsmaschine mit einer ersten Scheibe (138), die mit einer zweiten Scheibe (140) über einen Riemen (139), der sich zwischen den Scheiben erstreckt, gekuppelt ist, wobei die erste Scheibe die zweite Scheibe antreibt und damit die Entladeschnecke, wenn sich der Schwenkarm in seiner ausgestellten Stellung befindet, und von der zweiten Scheibe abgekuppelt ist, wenn sich der Schwenkarm in seiner zurückgezogenen Stellung befindet, dadurch gekennzeichnet, daß die zweite Scheibe (140) an dem Schwenkarm (190) angeordnet ist, der Schwenkarm mit einer Vorspannfeder (194) versehen ist, die an dem Chassis und an dem Schwenkarm zum Ziehen des Schwenkarmes in seine zurückgezogene Stellung befestigt ist, der hydraulische Motor (198) ein einfach wirkender hydraulischer Zylinder zum Verstellen des Schwenkarms in seine ausgestellte Stellung entgegen der Wirkung der Vorspannfeder ist, die zweite Scheibe (140) mit der Entladeschnecke (141) über eine Kette (204) gekuppelt ist und daß der Schwenkarm (190) ein U-förmiges Profil zur Bildung eines Kettenschutzes umfaßt.

2. Ein landwirtschaftlicher Mähdrescher nach Anspruch 1, dadurch gekennzeichnet, daß der hydraulische Motor an eine hydraulische Flüssigkeitsquelle (74, 218) mit konstantem Druck über ein Ventil (216) zum An- und Abkuppeln der hydraulischen Flüssigkeitsquelle an und von dem hydraulischen Motor angekuppelt ist.

3. Ein Mähdrescher, wie in dem Anspruch 1 oder 2 beansprucht, gekennzeichnet durch einen Riemenschutz (214), der, wenn der Schwenkarm zurückgezogen ist, den Riemen (139) berührt, um ihn von der ersten Scheibe (138) abzukuppeln.

## Revendications

1. Moissonneuse-batteuse agricole autopropulsée pour moissonner une récolte sur un champ et battre la récolte moissonnée afin de séparer le grain de la paille et de la balle, comprenant : un châssis (12) comportant des moyens avant et arrière de contact avec le sol (14,16) qui s'étendent vers le bas à partir du châssis, les moyens de contact avec le sol supportant le châssis et, lorsqu'ils sont mis en rotation, entraînant le châssis le long d'un champ ; des moyens de moissonnage (22) s'étendant à partir de l'avant du châssis, pour moissonner une récolte agricole sur un champ ; des moyens de battage et de séparation (31,39) placés à l'intérieur de la moissonneuse-batteuse, pour séparer le grain de la paille et de la balle ; un carter d'alimentation (24) pour diriger une récolte moissonnée, à partir des moyens de moissonnage, à l'intérieur de la moissonneuse-batteuse, vers les moyens de battage et de séparation ; un compartiment de grain propre (26) monté sur le châssis et recevant le grain séparé provenant des moyens de battage et de séparation, le compartiment de grain propre étant pourvu d'une vis convoyeuse de déchargement (141) pour décharger le compartiment ; un bras oscillant (190) monté de façon pivotante sur le châssis et pouvant pivoter entre une position d'extension et une position rétractée sur le châssis, au moyen d'un moteur hydraulique (198) ; et un moteur principal comportant une première poulie (138) couplée à une deuxième poulie (140) par une courroie (139) qui s'étend entre les poulies, la première poulie entraînant la deuxième poulie et donc la vis de déchargement lorsque le bras oscillant est dans sa position d'extension, et étant désaccouplée de la deuxième poulie lorsque le bras oscillant est dans sa position rétractée, caractérisée en ce que la deuxième poulie (140) est montée sur le bras oscillant (190), le bras oscillant est pourvu d'un ressort de sollicitation (194) monté sur le châssis et le bras oscillant de manière à tirer le bras oscillant vers sa position rétractée, le moteur hydraulique (198) est un vérin hydraulique à simple effet pour amener le bras oscillant à sa position d'extension contre l'action du ressort de sollicitation, la deuxième poulie (140) est couplée à la vis de déchargement (141) par une chaîne (204), et le bras oscillant (190) comprend un profilé en U pour constituer une protection de la chaîne.

2. Moissonneuse-batteuse agricole suivant la revendication 1, caractérisée en ce que le moteur hydraulique est connecté à une source à pression constante (74, 218) de fluide hydraulique par l'intermédiaire d'une vanne (216) pour connecter la source de fluide hydraulique au moteur hydraulique et déconnecter ladite source dudit moteur.

3. Moissonneuse-batteuse suivant la revendication 1 ou 2, caractérisée par une protection de courroie (214) qui vient en contact, lorsque le bras oscillant est rétracté, avec la courroie (139) pour la dégager de la première poulie (138).
